# EUROPÄISCHE PATENTANMELDUNG

(11) **EP 2 746 990 A2**
(43) Veröffentlichungstag der Anmeldung: **25.06.2014**
(21) Anmeldenummer: 13198788.5
(22) Anmeldetag: 20.12.2013
(51) Int. Cl.: G06K 9/00

(54) **Verfahren zum automatischen Klassifizieren von sich bewegenden Fahrzeugen**

(30) Priorität: 21.12.2012 DE 102012113009
(71) Anmelder: Jenoptik Robot GmbH, 40789 Monheim (DE)
(72) Erfinder: Lehning, Dr. Michael, 31137 Hildesheim (DE)
(74) Vertreter: Freitag, Joachim

(57) **Zusammenfassung**

Die Erfindung betrifft ein Verfahren zum Klassifizieren eines sich bewegenden Fahrzeugs.

Die Aufgabe, eine neuartige Möglichkeit zum Klassifizieren von sich im Verkehr bewegenden Fahrzeugen zu finden, die anhand von zweidimensionalen Bilddaten eine zuverlässige automatische Klassifizierung gestattet, wird erfindungsgemäß gelöst, indem ein Bild des Fahrzeugs mittels einer Kamera aufgenommen und daraus Position und perspektivische Ausrichtung des Fahrzeugs ermittelt werden, gerenderte 2D-Ansichten aus in einer Datenbank gespeicherten 3D-Fahrzeugmodellen in Positionen entlang einer erwarteten Bewegungsbahn des Fahrzeugs erzeugt und mit dem aufgenommenen Bild des Fahrzeugs verglichen werden und aus der aufgefundenen 2D-Ansicht mit der größten Übereinstimmung die Klassifizierung des Fahrzeugs durch Zuordnung des zugehörigen 3D-Fahrzeugmodells erfolgt.

## Beschreibung

Die Erfindung betrifft ein Verfahren zum Klassifizieren eines sich bewegenden Fahrzeugs, das insbesondere zur zuverlässigen automatischen Klassifizierung von Fahrzeugen verwendbar ist, die von einer videogestützten Verkehrsüberwachungsanlage aufgenommen werden.

Aus dem Stand der Technik sind Verfahren bekannt, bei denen äußere Merkmale für die Erfassung oder Klassifizierung von Kraftfahrzeugen verwendet werden. Diese Verfahren werden oft zur klassenspezifischen Erhebung von Straßen-Maut oder, in Verbindung mit Vorrichtungen zur Geschwindigkeitsmessung, zur Überwachung von Geschwindigkeitsbegrenzungen eingesetzt. Mit den Verfahren werden in der Regel die Signale eines oder mehrerer die Fahrzeuge erfassenden Sensoren ausgewertet. Um gleichzeitig eine Identifizierung der erfassten Fahrzeuge durchzuführen, werden sehr häufig bildgebende Sensoren eingesetzt, die eine Auswertung des Nummernschilds ermöglichen.

Entsprechend den oben genannten Beispielen ist es meist ausreichend, wenn eine grobe Klassifizierung der erfassten Fahrzeuge in die Klassen der Pkw und der Lkw erfolgt. In der EP 1 997 090 B1 wird mit einer neben der Fahrspur positionierten Kamera die dreidimensionale Form eines bewegten Fahrzeugs aus mehreren aufeinanderfolgenden Aufnahmen ermittelt. Mit der ermittelten Form wird dann durch einen Vergleich mit Formen aus einer bereits angelegten Datenbank die Identifikation des Fahrzeugtyps vorgenommen. Nachteilig hierbei ist, dass für die Ermittlung des Fahrzeugtyps mehrere Aufnahmen benötigt werden und dass die Aufnahmen übereinstimmend mit der Position, in der auch die Vergleichsbilder der Datenbank erstellt wurden, erfolgen müssen.

In der DE 101 48 289 A1 wird ein Verfahren beschrieben, bei dem Fahrzeuge in der Bewegung klassifiziert werden können. Das Verfahren ist speziell zur Überwachung und Erhebung einer Lkw-Maut ausgelegt. Die Fahrzeuge werden zunächst mittels LIDAR-Sensoren erfasst und verfolgt, mit denen sich der zurückgelegte Weg und die Geschwindigkeit des Fahrzeugs abschätzen lassen. Danach wird das Fahrzeug mittels Kameras aufgenommen und mittels weiterer Sensoren vermessen. Aus den Kamerabildern kann durch texterkennende Datenverarbeitung das Nummernschild ermittelt werden. Die bevorzugten weiteren Sensoren sind Lasersensoren, mit denen Kontur- und Strukturdaten wie Querschnitt, Länge Anzahl der Radachsen und das Typenzeichen des Fahrzeugs (Fahrzeugmarke) ermittelt werden können. Die ermittelten LIDAR-Daten werden den ermittelten Kontur- und Strukturdaten zugeordnet. Durch die Anwendung statistischer Methoden zur Auswertung mehrerer Messungen an einem Fahrzeug kann die Genauigkeit der Vermessungsergebnisse noch verbessert werden. Das Prinzip der Messung und der Messwerterfassung lässt den Schluss zu, dass die Vermessung relativ grob ausfällt. Das angewendete Verfahren ist ausschließlich zur Unterscheidung und Klassifizierung von mautpflichtigen Lkw vorgesehen, die aufgrund der großen Abmessungen, der Achsanzahl und der charakteristischen Form relativ einfach erkannt werden können. Dafür weist dieses Verfahren offensichtlich eine ausreichende Genauigkeit auf. Für eine Klassifizierung in der Klasse der vielfältig gestalteten Pkw ist davon auszugehen, dass die Unterscheidungsgenauigkeit des Verfahrens nicht ausreicht. Als ein Nachteil kann die Notwendigkeit angesehen werden, dass zur Klassifizierung am Fahrzeug selbst, mit mehreren Sensoren, dreidimensionale Daten ermittelt werden müssen. Das erhöht den materiellen Aufwand zur Erfassung und zur Verarbeitung der Daten. Außer der Erkennung der Radachsen und des Typenzeichens ist es nicht möglich, weitere Strukturen des Fahrzeugäußeren und des Fahrzeuginnenraums detailliert auszuwerten.

Aufgabe der Erfindung ist es, eine neuartige Möglichkeit zum Klassifizieren von sich im Verkehr bewegenden Fahrzeugen zu finden, die anhand von zweidimensionalen Bilddaten eine zuverlässige automatische Klassifizierung gestattet.
Eine erweiterte Aufgabe der Erfindung besteht darin, die für die Klassifizierung erforderlichen Datenmengen zu reduzieren, sodass Fahrzeugtypen, insbesondere auch Pkw-Typen, schneller automatisch ausgewertet werden können.

Erfindungsgemäß wird die Aufgabe bei einem Verfahren zum Klassifizieren eines sich bewegenden Fahrzeugs mit den Verfahrensschritten gelöst:
- Aufnehmen mindestens eines Bildes von einem Fahrzeug mittels einer Kamera und Ermitteln von Position und perspektivischer Ausrichtung des Fahrzeugs,
- Erzeugen von gerenderten 2D-Ansichten aus in einer Datenbank gespeicherten 3D-Fahrzeugmodellen in Positionen und perspektivischen Ausrichtungen, in denen das 3D-Fahrzeugmodell entlang einer erwarteten Bewegungsbahn des Fahrzeugs gegenüber der Kamera perspektivisch ausgerichtet sein könnte,
- Vergleichen des mindestens einen aufgenommenen Bildes des Fahrzeugs mit den gerenderten 2D-Ansichten der gespeicherten 3D-Fahrzeugmodelle und Auffinden der 2D-Ansicht mit der größten Übereinstimmung
- Klassifizieren des aufgenommenen Fahrzeugs mit dem 3D-Fahrzeugmodell, dass die größte Übereinstimmung mit einer der 2D-Ansichten aufweist.

Zum Erzeugen der gerenderten 2D-Ansichten wird ein Verfahrensschritt unterstellt, bei dem von einem 3D-Fahrzeugmodell durch eine Projektion auf eine definierte Ebene, die einer gewählten oder gewünschten Bildaufnahmeebene entspricht, eine 2D-Ansicht des 3D-Fahrzeugmodells erzeugt wird.

Vorteilhaft erfolgt das Aufnehmen des Bildes in einer Aufstellposition der Kamera mit einem bekannten Abstand und Seitenwinkel zum Rand einer vom Fahrzeug befahrenen Fahrbahn und mit einem bekannten Höhenwinkel der Kamera zur Oberfläche der Fahrbahn. Dabei ist es besonders zweckmäßig, die perspektivische Ausrichtung, der Position und der Dimension des aufgenommenen Fahrzeugs mittels einer Bildfolge aus mindestens zwei Bildern aufzunehmen.

In einem vorgeordneten Schritt wird zum Rendern der 3D-Fahrzeugmodelle entsprechend der perspektivischen Ausrichtung und der Dimension zweckmäßig eine Bildfolge eines aufgenommenen Referenzfahrzeugs aufgenommen und daraus ein Bild an einer ausgewählten Position gegenüber der Aufstellposition der Kamera ausgewählt, wobei für diese ausgewählte Position 2D-Ansichten von einer Vielzahl von 3D-Fahrzeugmodellen gerendert und in einem Speicher abgelegt werden.

Bei einer bevorzugten Variante des Verfahrens werden in einem vorgeordneten Schritt zum Rendern der 3D-Fahrzeugmodelle entsprechend der perspektivischen Ausrichtung und der Dimension mehrere Bilder aus der Bildfolge eines aufgenommenen Referenzfahrzeugs an mehreren ausgewählten Positionen des Fahrzeugs gegenüber der Aufstellposition ausgewählt, wobei für jede dieser ausgewählten Positionen 2D-Ansichten von jeweils einer Vielzahl von 3D-Fahrzeugmodellen gerendert und in einem Speicher abgelegt werden.
Dabei kann vorteilhaft zwischen zwei benachbarten der mehreren 2D-Ansichten eine Interpolation durchgeführt werden, wodurch der Vergleich des aufgenommenen Fahrzeugs mit den 2D-Ansichten unabhängig von der speziell ausgewählten Position der perspektivischen Ausrichtung des Fahrzeuges vorgenommen werden kann.

In einer bevorzugten Variante des Verfahrens wird zur Datenreduktion ein Bildausschnitt mit auswertbaren geometrischen Strukturen aus den gerenderten 2D-Ansichten aller 3D-Fahrzeugmodelle ausgewählt und aus dem mindestens einen aufgenommenen Bild des Fahrzeugs ein dem datenreduzierten Bildausschnitt der gerenderten 2D-Ansichten entsprechender Bildteil extrahiert.

Zur genaueren Klassifikation (Fahrzeugtypbestimmung) oder zur Identifikation von Fahrzeugen (z.B. für die Ahndung von Verkehrsverstößen) erweist es sich als zweckmäßig, dass durch die Wahl der Aufstellposition der Kamera das aufgenommene Fahrzeug bei einer perspektivischen Ausrichtung in mindestens einem Bild mit einem Nummernschild oder anderen charakteristischen geometrischen Strukturen erfasst wird.
Besonders vorteilhaft ist es, wenn anhand der aus der Aufstellposition bekannten Seiten- und Höhenwinkel eine Entzerrung des Nummernschilds erfolgt, um automatisch eine optische Zeichenerkennung (OCR) durchzuführen.

Es erweist sich als vorteilhaft, wenn die Ermittlung der Positionen und Dimensionen des aufgenommenen Fahrzeugs durch die Auswertung von Signalen eines Radargerätes durchgeführt wird.

Bevorzugt liegen die 3D-Fahrzeugmodelle in der Datenbank in Form von dreidimensionalen texturierten Oberflächennetzen vor, wobei an der Oberfläche und im Inneren der 3D-Fahrzeugmodelle zusätzlich geometrische Strukturen definiert sein können. Für die letztere Option ist es vorteilhaft, wenn im Inneren der 3D-Fahrzeugmodelle zumindest eine Sitzpositionen von Insassen als geometrische Struktur der 3D-Fahrzeugmodelle definiert ist.

Zur Verbesserung der automatisierten Auswertung wird die Extraktion von datenreduzierten Bildausschnitten zweckmäßig entsprechend den an den 3D-Fahrzeugmodellen definierten geometrischen Strukturen vorgenommen.

Es erweist sich als besonders vorteilhaft, dass eine Histogrammanpassung durchgeführt wird, die entweder bildglobal oder lokal adaptiv angewendet wird, wodurch eine detailgetreuere Darstellung insbesondere in dunkleren Bereichen der datenreduzierten Bildausschnitte erreichbar ist.

In einer bevorzugten Variante des erfindungsgemäßen Verfahrens umfasst das Erzeugen der gerenderten 2D-Ansichten zweckmäßig folgende Einzelschritte:
- Anlegen einer Datenbank aus 3D-Fahrzeugmodellen verschiedenster Fahrzeugtypen, wobei an den 3D-Fahrzeugmodellen eine Definition von geometrische Strukturen erfolgt, die für eine Auswertung vorgesehen sind,
- Festlegen einer Kameraposition zum Erfassen von sich im fließenden Verkehr auf einer Fahrbahn bewegenden Fahrzeugen mit einer Kamera, wobei die Erfassung mindestens eines Bildes in einem bekannten Abstand, Winkel und einer bekannten Höhe zur Fahrbahn erfolgt, wodurch eine perspektivische Ausrichtung und der Dimension der aufzunehmenden Fahrzeuge vorgegeben ist,
- Ausrichten und Dimensionieren der 3D-Fahrzeugmodelle der Datenbank entsprechend der Bewegungsbahn bei festgelegter Kameraposition und des Abstands zur Fahrbahn,
- Erzeugen und Speichern von 2D-Ansichten der 3D-Fahrzeugmodelle durch Rendern der ausgerichteten und dimensionierten 3D-Fahrzeugmodelle der Datenbank.

Die Erfindung basiert auf der Grundidee, dass die Verkehrsüberwachung unter Verwendung von 2D-Bildern aufgenommener Fahrzeuge immer noch einen erheblichen manuellen Nachbereitungsaufwand erfordert, wenn z.B. außerhalb von sog. Mauterfassungskriterien eine genauere Fahrzeugklassifikation bis hin zur Identifikation des Fahrzeugs bei einem Verkehrsverstoß erforderlich ist. Die vorliegende Erfindung ist deshalb darauf ausgerichtet, die Klassifikation anhand von objektiven Kriterien zu verbessern, indem in einer Datenbank eine Vielzahl von gespeicherten 3D-Fahrzeugmodellen derart an die Aufstellposition einer Kamera angepasst werden, dass für den Ähnlichkeitsvergleich des 2D-Bildes des aufgenommenen Fahrzeugs ein 2D-Referenzbild zur Verfügung steht, das sowohl für die Fahrzeugklassifikation als auch für eine nachgelagerte automatische Auswertung geeignet ist. Dafür sind die erfindungsgemäßen Verfahrensschritte zur Bestimmung der Aufstellposition der Kamera gegenüber der Fahrbahn und des perspektivisch angepassten Renderns der 3D-Modell die entscheidende Voraussetzung, welche die angestrebte Verbesserung der Klassifikationssicherheit in einer automatisierten Auswertung ermöglicht. In einer bevorzugten Ausführung sind sogar Auswertungen bis hin zur Fahrzeugidentifikation durch Fahrzeugdetails wie Nummernschild, Fahrzeugbeleuchtung (z.B. Scheinwerferdefekt, Blinklichtverstoß etc.) oder auch eine Insassendetektion (z.B. Insassenzählung, Fahrerermittlung, Handyverstoß usw.) möglich.

Die Erfindung gestattet es, bei im Verkehr bewegten Fahrzeugen, anhand von zweidimensionalen Bilddaten eine zuverlässige Klassifizierung, insbesondere auch für Pkw-Typen zu erreichen, durch schnelle Lokalisierung von typenspezifischen Fahrzeugdetails zur Reduzierung der zu verarbeitenden Datenmengen beizutragen und damit eine automatische Auswertung der Fahrzeugdetails zu ermöglichen.

Die Erfindung soll nachfolgend anhand von Ausführungsbeispielen näher erläutert werden. Die zugehörige Zeichnung zeigt:

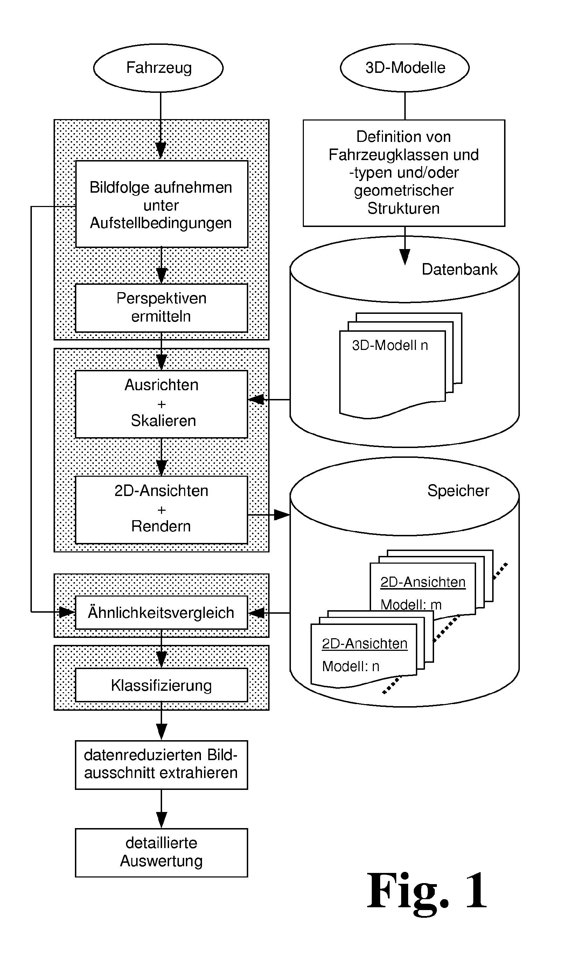

- Fig. 1:: einen schematischen Ablaufplan des erfindungsgemäßen Verfahrens.

Das Verfahren wird gemäß den in Fig. 1 schematisch dargestellten Verfahrensschritten durchgeführt, wobei die für den erfindungsgemäßen Verfahrensablauf wesentlichen Schritte in grau unterlegt Kästen dargestellt sind.

In einem ersten Schritt wird mit einer Kamera, die in einer frei wählbaren aber festen Aufstellposition auf eine Fahrbahn gerichtet ist, eine Bildfolge von einem sich im fließenden Verkehr auf der Fahrbahn bewegenden Fahrzeug aufgenommen. Diese Bildfolge kann aus digitalen Einzelbildern bestehen oder eine Videosequenz sein. Ein in der Bildfolge erfasster, unveränderter Bildbereich wird im folgenden als eine Szene bezeichnet.

Die relativ zum Fahrzeug definierte Aufstellposition ist dabei grundsätzlich durch drei Abstandswerte und drei Winkelwerte beschrieben, unter denen die Kamera in einem kartesischen Koordinatensystem ausgerichtet ist und die Szene betrachtet. Diese sechs Parameter werden in der Literatur als extrinsische Parameter bezeichnet. Die Abbildung der Szene innerhalb der Kamera entspricht den Gesetzen der Abbildungsoptik und wird häufig mit fünf Parametern angenähert. Diese Parameter werden in der Literatur als intrinsische Parameter bezeichnet. Mit den insgesamt elf Parametern wird eine Perspektive der Kamera gegenüber der Szene vollständig beschrieben. Für einen realen Anwendungsfall können in der Regel Vereinfachungen vorgenommen werden, sodass die Anzahl der Parameter deutlich reduziert werden kann. Oft sind die intrinsischen Parameter bereits bekannt, sodass nur noch die extrinsischen Parameter ermittelt oder abgeschätzt werden müssen.

Die extrinsischen Parameter können beispielsweise in Bezug auf den in der Szene erfassten Verlauf der Fahrbahn ermittelt werden. Dazu kann die Aufstellposition der Kamera anhand eines bekannten Höhenwinkels (Ausrichtung und Abstand gegenüber der Oberfläche der Fahrbahn) und eines bekannten Seitenwinkels (Ausrichtung und Abstand gegenüber dem Rand der Fahrbahn) definiert werden.

Sind die extrinsischen Parameter unbekannt, kann über mathematische Verfahren eine Schätzung der Aufstellposition erfolgen. Dafür werden Parametersätze generiert, anhand derer auf die Aufstellposition rückgeschlossen werden kann. Parametersätze können beispielsweise ausgehend von an Fahrzeugen lokalisierten Nummernschildern generiert werden, deren Abmessungen und Größenverhältnisse bekannt sind. Die Aufstellposition ist dabei so gewählt, dass in mindestens einem Bild der Bildfolge auch das Nummernschild an der Front des Fahrzeugs erfasst werden kann. Dieser Vorgang wird anschließend für weitere Fahrzeugdurchfahrten wiederholt, sodass die extrinsischen Parameter in der geschätzten Aufstellposition nach und nach optimiert werden können.

Darüber hinaus können weitere Informationen über die Aufstellposition durch eine Fluchtpunktschätzungen gewonnen werden. Für die Fluchtpunktschätzung wird in der Bildfolge ein optischer Fluss ausgewertet. Der optischer Fluss ist ein Vektorfeld, mit dem alle, sich in der Bildfolge bewegenden Bildpunkte beschrieben werden. Anhand der Vektoren lassen sich Bewegungsgeschwindigkeit und Bewegungsrichtung der bewegten Bildpunkte ermitteln.

Die Perspektive wird aus einer Fahrtrichtung des Fahrzeugs bestimmt. Dazu wird mit einem zusätzlichen Sensor, beispielsweise einem Radargerät, gleichzeitig zur Bildaufnahme jeweils auch die Entfernung und der Winkel des Fahrzeugs zur Aufstellposition des Radargeräts und die Geschwindigkeit des Fahrzeugs bestimmt. Aus den sich von Einzelbild zu Einzelbild ändernden Werten und der ebenfalls bekannten Anordnung des Radargeräts zur Fahrbahn kann die Fahrtrichtung und damit die perspektivische Ausrichtung des aufgenommenen Fahrzeugs in den Einzelbildern ermittelt werden.

Alternativ oder zusätzlich können aus dem optischen Fluss und dem Verlauf der Fahrbahn Informationen über den geometrischen Bezug zwischen einer Position des Fahrzeugs und der Aufstellposition der Kamera gewonnen werden. Insbesondere kann aus den Vektoren des optischen Flusses die konkrete räumliche Position des Fahrzeugs einschließlich der Fahrtrichtungsinformation gewonnen werden. Dabei wird angenommen, dass sich die Vektoren des optischen Flusses die einem Objekt zugeordnet werden können in der Regel in Ebenen bewegen, die parallel zur Oberfläche der Fahrbahn liegen. Entsprechend der aufgenommenen Szene liegt die Fahrbahn als ein 3D-Fahrbahnmodell vor, dass zuvor erstellt und hinterlegt wurde. Der zeitliche Abstand zwischen zwei Einzelbildern, die der Analyse des optischen Flusses zugrunde gelegt werden, kann durch Multiplikation mit der vom Radar ermittelten Fahrzeuggeschwindigkeit in einen Raumabstand zurückgerechnet werden. Der zurückgerechnete Raumabstand erlaubt eine dem Fachmann bekannte Berechnung der räumlichen Positionierung und Orientierung des Flussvektors mittels photogrammetrischer Methoden.

Mit der bekannten Aufstellposition der Kamera kann die Perspektive, die Position, und eine Dimension des aufgenommenen Fahrzeugs in jedem Einzelbild der Bildfolge ermittelt werden.
Entsprechend den ermittelten Positionen, Perspektiven und Dimensionen der aufgenommenen Fahrzeuge und des 3D-Fahrbahnmodells werden anschließend in einer Datenbank hinterlegte 3D-Fahrzeugmodelle ausgerichtet und skaliert. Danach entsprechen die Ausrichtungen und Dimensionen aller in der Datenbank hinterlegten 3D-Fahrzeugmodelle denen der aufgenommenen Fahrzeuge aus einem Einzelbild oder aus den Bildern einer Bildfolge.

Die detaillierten 3D-Fahrzeugmodelle liegen für eine Vielzahl der unterschiedlichsten Typen von Fahrzeugen vor und sind in Form von dreidimensionalen, texturierten Oberflächennetzen in der Datenbank gespeichert. Die 3D-Fahrzeugmodelle sind bereits nach Fahrzeugklassen und -typen geordnet abgelegt. Für eine spätere detaillierte Auswertung der aufgenommenen Fahrzeuge können an den 3D-Fahrzeugmodellen bestimmte geometrische Strukturen definiert, die für das entsprechende Fahrzeug charakteristisch sind. Die geometrischen Strukturen können dabei sowohl auf der Oberfläche als auch im Inneren des 3D-Fahrzeugmodells definiert sein. Zu den oberflächlichen geometrischen Strukturen gehören beispielsweise das Nummernschild, die Beleuchtungseinrichtung, der Kühlergrill, die Front- und Seitenscheiben, das Dach oder die Räder. Als innere geometrische Strukturen können beispielsweise die Rückenlehnen der Sitze oder das Lenkrad definiert sein.

Nachdem die 3D-Fahrzeugmodelle ausgerichteten und skaliert sind, werden von jedem der 3D-Fahrzeugmodelle ein (bei Einzelbildern) oder mehrerer (bei Bildern einer Bildfolge) 2D-Ansichten erstellt. Das erfolgt durch Rendern der 3D-Fahrzeugmodelle in der einen oder in den mehreren verschiedenen Positionen. Um die theoretisch sehr hohe Anzahl möglicher 2D-Ansichten zur Reduzierung des Rechen- und Speicheraufwands gering zu halten, werden die 3D-Fahrzeugmodelle überwiegend in den Positionen gerendert, in denen das 3D-Fahrzeugmodell entlang eines 3D-Fahrbahnmodells, das aus der durch die Kameraaufstellung vorgegebenen Straßenlage (z.B. durch vorherige Serienbildaufnahme eines beliebigen Referenzfahrzeugs) ermittelbar ist, geführt wird.

Die gerenderten 2D-Ansichten werden in einem Speicher abgelegt. Aufgrund der bereits klassifizierten oder typisierten 3D-Fahrzeugmodelle sind auch die 2D-Ansichten eineindeutig zugeordnet und können zur Erkennung (Klassifizierung oder Identifizierung) des aufgenommenen Fahrzeugs verwendet werden. Damit die gespeicherten 2D-Ansichten zur Erkennung weiterer aufgenommener Fahrzeuge genutzt werden können, ist es erforderlich, dass die intrinsischen und extrinsischen Parameter der Kamera unverändert bleiben. Aus den im Speicher hinterlegten Daten lässt sich so mit zunehmender Anzahl aufgenommener Fahrzeuge eine szenenadaptive Datenbank erstellen.

In einer anderen Variante des Verfahrens werden die Perspektive und die Dimension des aufgenommenen Fahrzeugs in mindestens zwei Bildern der Bildfolge ermittelt. Zwischen den beiden nacheinander aufgenommenen Bildern kann die Perspektive und Dimension interpoliert werden, sodass Perspektive und Dimension auch zwischen den zwei Bildern ermittelbar ist. Auf diese Weise lassen sich im nachfolgend beschriebenen Verfahrensschritt aus zwei Bildern mehrere 2D-Ansichten des 3D-Fahrzeugmodells erzeugen, die im Speicher abgelegt werden. Durch das Vorhandensein mehrerer 2D-Ansichten ist der Vergleich des aufgenommenen Fahrzeugs nicht mehr auf ein bestimmtes Bild der Bildfolge beschränkt, wodurch das Verfahren flexibler wird. Beispielsweise kann an einer verändernden perspektivischen Ausrichtung des Fahrzeuges in zwei nacheinander aufgenommenen Bildern eine Kurvenfahrt und deren Parameter abgeleitet werden.

Die Erkennung der verschiedenen Fahrzeuge erfolgt in einem weiteren Verfahrensschritt durch einen Ähnlichkeitsvergleich des Bildes oder der Bilder des aufgenommenen Fahrzeugs mit den im Speicher hinterlegten 2D-Ansichten. Im einfachsten Fall ist es ausreichend wenn für den Ähnlichkeitsvergleich ein Einzelbild verwendet wird, bei dem jedes der unterschiedlichen, aufgenommenen Fahrzeuge an immer gleicher Stelle zur Aufstellposition der Kamera aufgenommen wurde. In diesem Fall kann nach einer einmaligen Ermittlung der Perspektive eines als Referenzfahrzeug verwendetes ersten aufgenommenen Fahrzeugs, auch auf die Perspektiven aller anderen aufgenommenen Fahrzeuge geschlossen werden. Alle weiteren Fahrzeuge nehmen eine mit den 2D-Ansichten vergleichbare Perspektive ein.

Ist es in der erfassten Szene nicht möglich, das Fahrzeug an immer gleicher Stelle aufzunehmen, kann auch ein beliebiges Bild aus der aufgenommenen Bildfolge des aufgenommenen Fahrzeugs für den Ähnlichkeitsvergleich verwendet werden. Mit den bereits beschrieben Vorgehensweisen ist es dann auch möglich, die Perspektive des aufgenommenen Fahrzeugs in jedem beliebigen Einzelbild der Bildfolge zu ermitteln.

Bei dem Ähnlichkeitsvergleich wird das aufgenommene Fahrzeug auf Ähnlichkeit zu den 2D-Ansichten untersucht. Als Ergebnis des Vergleichs wird das 3D-Fahrzeugmodell mit der größten Übereinstimmung zum aufgenommenen Fahrzeug ermittelt. Durch die Zuordnung einer mit dem ermittelten 3D-Fahrzeugmodell verbundenen Fahrzeugklasse oder eines Fahrzeugtyps ist das aufgenommenen Fahrzeug nach dem Vergleich ebenfalls klassifiziert.

Sind am zugeordneten 3D-Fahrzeugmodell geometrischen Strukturen definiert, so werden diese beim Rendern in die 2D-Ansicht übertragen und zum Ausschneiden entsprechender Bildausschnitte oder zum Festlegen näher zu untersuchender Bildbereiche des Bildes des aufgenommenen Fahrzeugs benutzt. Dadurch wird die auszuwertende Datenmenge deutlich reduziert.

Zusätzlich zur Klassifizierung lassen sich anhand der Bildausschnitte detailliertere Auswertungen vornehmen. Die Bildausschnitte oder Bildbereiche werden dazu mittels geeigneter Routinen der Bildverarbeitung optimiert und einer automatischen Auswertung unterzogen. Als effektive Optimierungsroutine wird beispielsweise eine Histogrammanpassung angewendet, mit der die Helligkeit oder der Kontrastumfang der gesamten 2D-Ansicht (bildglobal) oder des Bildausschnitts (lokal adaptiv) reguliert werden kann. Zur Regulierung des Kontrastumfangs wird eine reell im Bild vorkommende und in der Regel begrenzte Verteilung der Helligkeitswerte auf den gesamten, im Spektrogramm verfügbaren Helligkeitsbereich transformiert. Dadurch kann eine verbesserte Verteilung der Farbgebung erreicht werde. Zur Regulierung der Helligkeit kann die in der Regel begrenzte Verteilung der im Bild vorkommenden Helligkeitswerte innerhalb des Histogramms verschoben werden, sodass entweder eine Aufhellung oder eine Abdunklung des Bildes erfolgt. In dunklen Bildern oder Bildausschnitten kann damit eine detailgetreuere Darstellung ereicht werden.

Im Fall des Nummernschilds wird der Bildausschnitt zunächst anhand der bekannten Aufstellposition der Kamera perspektivisch entzerrt. Nach der Entzerrung kann der Inhalt des Nummernschilds mittels einer automatischen Zeichenerkennung (OCR) ausgelesen werden. Somit kann das klassifizierte Fahrzeug auch identifiziert und einem Fahrzeughalter zugeordnet werden.

Im Bildausschnitt der Frontscheibe kann anhand der bekannten und fahrzeugtypischen Position der Rückenlehnen auf den Bildbereich geschlossen werden, in dem der Kopf des Fahrers oder die Position des Beifahrers erwartet werden kann. Der Bildbereich mit dem Kopf des Fahrers kann mit Mitteln zur Verbesserung der Bildqualität bearbeitet werden, um anschließend in automatisierten Prozessen beispielsweise die Gesichtserkennung zu ermöglichen, die Benutzung des Sicherheitsgurts zu überprüfen oder das Telefonieren, Rauchen, Trinken oder Essen des Fahrers nachzuweisen. Die Position des Beifahrers kann zur Anonymisierung im gesamten Bildbereich der Frontscheibe automatisch ausgeblendet werden.

Anhand der Bildausschnitte aller Scheiben im Zusammenhang mit den Positionen der Rückenlehnen kann das aufgenommene Fahrzeug auch auf die Anzahl aller Insassen überprüft werden. So lässt sich eine vom Besetzungsgrad des Fahrzeugs abhängige Benutzung bestimmter Fahrspuren, wie z.B. für HOV (High occupacy vehicle) überwachen.

Die Bildausschnitte der Beleuchtungseinrichtungen können auf Defekte oder auf situationsgemäße Anwendung der Beleuchtung hin ausgewertet werden. Sie können aber auch ausschließlich zur Typenklassifikation verwendet werden.

Anhand der Anzahl der als Räder definierten geometrischen Strukturen des ermittelten 3D-Fahrzeugmodells ist die Anzahl der Achsen des aufgenommenen Fahrzeugs bekannt. Dadurch kann das Fahrzeug insbesondere bei der Berechnung einer Straßenmaut leichter eingeordnet werden. Werden auch die Bildausschnitte der Räder ausgewertet, lässt sich bei Fahrzeugen mit einer Liftachse auch deren Stellung überprüfen.

Um bei der Anwendung des Verfahrens zur Klassifizierung von LKW mit Auflieger oder anderen Fahrzeuggespannen (z.B. LKW + Anhänger oder PKW mit PKW-Anhänger kombiniert werden) die für die 3D-Fahrzeugmodelle erforderliche Datenmenge zu reduzieren, werden die 3D-Modelle für die Auflieger und Anhänger separat erstellt. Zur Erkennung der Fahrzeuge können die 3D-Fahrzeugmodelle der LKW, PKW, Auflieger und Anhänger beliebig kombiniert werden. Genauso ist es auch möglich, auswertbare Anbauteile wie beispielsweise Dachboxen, Fahrradträger usw. als einzelne 3D-Modelle zu hinterlegen.

## Patentansprüche

1. Verfahren zum Klassifizieren eines sich bewegenden Fahrzeuges mit den Verfahrensschritten:
• Aufnehmen mindestens eines Bildes von einem Fahrzeug mittels einer Kamera und Ermitteln von Position und perspektivischer Ausrichtung des Fahrzeugs,
• Erzeugen von gerenderten 2D-Ansichten aus in einer Datenbank gespeicherten 3D-Fahrzeugmodellen in Positionen und perspektivischen Ausrichtungen, in denen das 3D-Fahrzeugmodell entlang einer erwarteten Bewegungsbahn des Fahrzeugs gegenüber der Kamera perspektivisch ausgerichtet sein könnte,
• Vergleichen des mindestens einen aufgenommenen Bildes des Fahrzeugs mit den gerenderten 2D-Ansichten der gespeicherten 3D-Fahrzeugmodelle und Auffinden der 2D-Ansicht mit der größten Übereinstimmung
• Klassifizieren des aufgenommenen Fahrzeugs mit dem 3D-Fahrzeugmodell, dass die größte Übereinstimmung mit einer der 2D-Ansichten aufweist.

2. Verfahren nach Anspruch 1, **dadurch gekennzeichnet, dass** das Aufnehmen des Bildes in einer Aufstellposition der Kamera mit einem bekannten Abstand und Seitenwinkel zum Rand einer vom Fahrzeug befahrenen Fahrbahn und mit einem bekannten Höhenwinkel der Kamera zur Oberfläche der Fahrbahn erfolgt.

3. Verfahren nach Anspruch 1, **dadurch gekennzeichnet, dass** die Ermittlung der perspektivischen Ausrichtung, der Position und der Dimension des aufgenommenen Fahrzeugs mittels einer Bildfolge aus mindestens zwei Bildern erfolgt.

4. Verfahren nach Anspruch 1, **dadurch gekennzeichnet, dass** in einem vorgeordneten Schritt, zum Rendern der 3D-Fahrzeugmodelle entsprechend der perspektivischen Ausrichtung und der Dimension, eine Bildfolge eines aufgenommenen Referenzfahrzeugs aufgenommen und daraus ein Bild an einer ausgewählten Position gegenüber der Aufstellposition der Kamera ausgewählt wird, wobei für die ausgewählte Position 2D-Ansichten von einer Vielzahl von 3D-Fahrzeugmodellen gerendert und in einem Speicher abgelegt werden.

5. Verfahren nach Anspruch 4, **dadurch gekennzeichnet, dass** in einem vorgeordneten Schritt, zum Rendern der 3D-Fahrzeugmodelle entsprechend der perspektivischen Ausrichtung und der Dimension, mehrere Bilder aus der Bildfolge eines aufgenommenen Referenzfahrzeugs an mehreren ausgewählten Positionen des Fahrzeugs gegenüber der Aufstellposition ausgewählt werden, wobei für jede dieser ausgewählten Positionen 2D-Ansichten von jeweils einer Vielzahl von 3D-Fahrzeugmodellen gerendert und in einem Speicher abgelegt werden.

6. Verfahren nach Anspruch 5, **dadurch gekennzeichnet, dass** zwischen zwei benachbarten der mehreren 2D-Ansichten eine Interpolation möglich ist, wodurch der Vergleich des aufgenommenen Fahrzeugs mit den 2D-Ansichten unabhängig von der speziell ausgewählten Position der perspektivischen Ausrichtung des Fahrzeuges vorgenommen werden kann.

7. Verfahren nach Anspruch 1, **dadurch gekennzeichnet, dass** ein datenreduzierter Bildausschnitt mit auswertbaren geometrischen Strukturen aus den gerenderten 2D-Ansichten aller 3D-Fahrzeugmodelle ausgewählt wird und aus dem mindestens einen aufgenommenen Bild des Fahrzeugs ein dem datenreduzierten Bildausschnitt der gerenderten 2D-Ansichten entsprechender Bildteil extrahiert wird.

8. Verfahren nach Anspruch 1, **dadurch gekennzeichnet, dass** durch Wahl der Aufstellposition der Kamera das aufgenommene Fahrzeug in mindestens einem Bild bei einer perspektivischen Ausrichtung mit einem Nummernschild oder anderen geometrischen Strukturen erfasst wird.

9. Verfahren nach Anspruch 8, **dadurch gekennzeichnet, dass** anhand der aus der Aufstellposition bekannten Seiten- und Höhenwinkel eine Entzerrung des Nummernschilds erfolgt, um automatisch eine optische Zeichenerkennung (OCR) durchzuführen.

10. Verfahren nach Anspruch 1, **dadurch gekennzeichnet, dass** die Ermittlung der Positionen und Dimensionen des aufgenommenen Fahrzeugs durch die Auswertung von Signalen eines Radargerätes erfolgt.

11. Verfahren nach Anspruch 1, **dadurch gekennzeichnet, dass** die 3D-Fahrzeugmodelle in der Datenbank in Form von dreidimensionalen texturierten Oberflächennetzen vorliegen, wobei an der Oberfläche und im Inneren der 3D-Fahrzeugmodelle geometrische Strukturen definiert sind.

12. Verfahren nach Anspruch 11, **dadurch gekennzeichnet, dass** im Inneren der 3D-Fahrzeugmodelle zumindest eine Sitzpositionen von Insassen als geometrische Struktur der 3D-Fahrzeugmodelle definiert ist.

13. Verfahren nach Anspruch 6, **dadurch gekennzeichnet, dass** die Extraktion von datenreduzierten Bildausschnitten entsprechend den an den 3D-Fahrzeugmodellen definierten geometrischen Strukturen erfolgt.

14. Verfahren nach Anspruch 1, **dadurch gekennzeichnet, dass** durch die Anwendung einer Histogrammanpassung, die entweder bildglobal oder lokal adaptiv angewendet wird, eine detailgetreuere Darstellung in dunkleren Bereichen der datenreduzierten Bildausschnitte erreichbar ist.

15. Verfahren nach Anspruch 1, **dadurch gekennzeichnet, dass** das Erzeugen der gerenderten 2D-Ansichten folgende Einzelschritte umfasst:
• Anlegen einer Datenbank aus 3D-Fahrzeugmodellen verschiedenster Fahrzeugtypen, wobei an den 3D-Fahrzeugmodellen eine Definition von geometrische Strukturen erfolgt, die für eine Auswertung vorgesehen sind,
• Festlegen einer Kameraposition zum Erfassen von sich im fließenden Verkehr auf einer Fahrbahn bewegenden Fahrzeugen mit einer Kamera, wobei die Erfassung mindestens eines Bildes in einem bekannten Abstand, Winkel und einer bekannten Höhe zur Fahrbahn erfolgt, wodurch eine perspektivische Ausrichtung und der Dimension der aufzunehmenden Fahrzeuge vorgegeben ist,
• Ausrichten und Dimensionieren der 3D-Fahrzeugmodelle der Datenbank entsprechend der Bewegungsbahn bei festgelegter Kameraposition und des Abstands zur Fahrbahn,
• Erzeugen und Speichern von 2D-Ansichten der 3D-Fahrzeugmodelle durch Rendern der ausgerichteten und dimensionierten 3D-Fahrzeugmodelle der Datenbank.
